# EUROPÄISCHE PATENTSCHRIFT

(11) **EP 1 064 689 B1**
(45) Veröffentlichungstag und Bekanntmachung des Hinweises auf die Patenterteilung: **02.01.2002**
(21) Anmeldenummer: 99932535.0
(22) Anmeldetag: 27.01.1999
(51) Int. Cl.: H01M 8/02, H01M 8/12

(54) **HOCHTEMPERATUR-BRENNSTOFFZELLE UND HOCHTEMPERATUR-BRENNSTOFFZELLENSTAPEL**
HIGH-TEMPERATURE FUEL CELL AND STACK OF HIGH-TEMPERATURE FUEL CELLS
PILE A COMBUSTIBLE HAUTE TEMPERATURE ET EMPILAGE DE PILES A COMBUSTIBLE HAUTE TEMPERATURE

(30) Priorität: 12.02.1998 DE 29802444 U
(43) Veröffentlichungstag der Anmeldung: 03.01.2001
(73) Patentinhaber: SIEMENS AKTIENGESELLSCHAFT, 80333 München (DE)
(72) Erfinder: JANSING, Thomas, D-90425 Nürnberg (DE)
(86) Internationale Anmeldenummer: DE9900206
(87) Internationale Veröffentlichungsnummer: WO9941795

(56) Entgegenhaltungen:
- EP-A- 0 418 528
- WO-A-97/50138
- DE-A- 4 436 456
- US-A- 4 721 556
- US-A- 5 397 657

## Beschreibung

Die Erfindung bezieht sich auf eine Hochtemperatur-Brennstoffzelle mit wenigstens einer Verbundleiterplatte und einer Elektrolyt-Elektroden-Einheit, sowie auf einen aus derartigen Hochtemperatur-Brennstoffzellen gebildeten Hochtemperatur-Brennstoffzellenstapel.

Es ist bekannt, daß bei der Elektrolyse von Wasser die Wassermoleküle durch elektrischen Strom in Wasserstoff (H₂) und Sauerstoff (O₂) zerlegt werden. In einer Brennstoffzelle läuft dieser Vorgang in umgekehrter Richtung ab. Durch die elektrochemische Verbindung von Wasserstoff (H₂) und Sauerstoff (O₂) zu Wasser entsteht elektrischer Strom mit hohem Wirkungsgrad. Wenn als Brenngas reiner Wasserstoff (H₂) eingesetzt wird, geschieht dies ohne Emission von Schadstoffen und Kohlendioxid. Auch mit einem technischen Brenngas, beispielsweise Erdgas oder Kohlegas, und mit Luft (die zusätzlich mit Sauerstoff (O₂) angereichert sein kann) anstelle von reinem Sauerstoff (O₂) erzeugt eine Brennstoffzelle deutlich weniger Schadstoffe und weniger Kohlendioxid als andere Energieerzeuger, die mit verschiedenen Energieträgern arbeiten. Die technische Umsetzung des Prinzips der Brennstoffzelle hat zu unterschiedlichen Lösungen, und zwar mit verschiedenartigen Elektrolyten und mit Betriebstemperaturen zwischen 80°C und 1000°C geführt.

In Abhängigkeit von ihrer Betriebstemperatur werden die Brennstoffzellen in Nieder-, Mittel- und Hochtemperatur-Brennstoffzellen eingeteilt, die sich wiederum durch verschiedene technische Ausführungsformen unterscheiden.

Bei einem aus einer Vielzahl von Hochtemperatur-Brennstoffzellen sich zusammensetzenden Hochtemperatur-Brennstoffzellenstapel (in der Fachliteratur wird ein Brennstoffzellenstapel auch "Stack" genannt) liegen unter einer oberen Verbundleiterplatte, welche den Hochtemperatur-Brennstoffzellenstapel abdeckt, der Reihenfolge nach wenigstens eine Schutzschicht, eine Kontaktschicht, eine Elektrolyt-Elektroden-Einheit, eine weitere Kontaktschicht, eine weitere Verbundleiterplatte, usw.

Die Elektrolyt-Elektroden-Einheit umfaßt dabei zwei Elektroden - eine Anode und eine Kathode - und einen zwischen Anode und Kathode angeordneten, als Membran ausgeführten Festkörperelektrolyten. Dabei bildet jeweils eine zwischen zwei benachbarten Verbundleiterplatten liegende Elektrolyt-Elektroden-Einheit mit den beidseitig an der Elektrolyt-Elektroden-Einheit unmittelbar anliegenden Kontaktschichten eine Hochtemperatur-Brennstoffzelle, zu der auch noch die an den Kontaktschichten anliegenden Seiten jeder der beiden Verbundleiterplatten gehören. Dieser Typ und weitere Brennstoffzellen-Typen sind beispielsweise aus dem "Fuel Cell Handbook" von A. J. Appleby und F. R. Foulkes, 1989, Seiten 440 bis 454, bekannt.

Eine Hochtemperatur-Brennstoffzelle alleine liefert eine Betriebsspannung von unter einem Volt. In einem Hochtemperatur-Brennstoffzellenstapel werden eine Vielzahl von Hochtemperatur-Brennstoffzellen zusammengefaßt. Durch das In-Reihe-Schalten einer Vielzahl benachbarter Hochtemperatur-Brennstoffzellen kann die Betriebsspannung einer Brennstoffzellenanlage einige 100 Volt betragen. Bedingt durch den hohen Strom, den eine Hochtemperatur-Brennstoffzelle liefert, - bis zu 1000 Ampere bei großen Hochtemperatur-Brennstoffzellen - ist eine elektrische Verbindung zwischen den einzelnen Zellen zu bevorzugen, die bei den obengenannten Bedingungen einen besonders niedrigen elektrischen Serienwiderstand verursacht.

Die elektrische Verbindung zwischen zwei Hochtemperatur-Brennstoffzellen wird durch eine Verbundleiterplatte hergestellt, über die die Anode der einen Hochtemperatur-Brennstoffzelle mit der Kathode der anderen Hochtemperatur-Brennstoffzelle verbunden wird. Die Verbundleiterplatte ist dementsprechend mit der Anode der einen Hochtemperatur-Brennstoffzelle und der Kathode der anderen Hochtemperatur-Brennstoffzellen elektrisch verbunden. Die elektrische Verbindung zwischen der Anode und der Verbundleiterplatte wird durch einen elektrischen Leiter hergestellt, der als ein Nickelnetz ausgebildet sein kann (siehe beispielsweise DE 196 49 457 C1). Dabei hat es sich gezeigt, daß sich zwischen Nickelnetz und Verbundleiterplatte ein hoher elektrischer Serienwiderstand von mehreren 100 mOhm cm² einstellt. Dadurch wird nachteiligerweise die elektrische Leistung des Hochtemperatur-Brennstoffzellenstapels stark negativ beeinflußt.

Aufgabe der Erfindung ist es, eine Hochtemperatur-Brennstoffzelle der eingangs genannten Art dahingehend zu verbessern, daß ein erhöhter elektrischer Serienwiderstand vermieden und eine hohe Leitfähigkeit auch über längere Zeit sichergestellt ist. Ferner ist es Aufgabe der Erfindung, einen Hochtemperatur-Brennstoffzellenstapel der eingangs genannten Art in der Weise zu verbessern, daß ein erhöhter elektrischer Serienwiderstand vermieden und eine hohe Leitfähigkeit auch über längere Zeit sichergestellt ist.

Die erstgenannte Aufgabe wird durch eine Hochtemperatur-Brennstoffzelle der eingangs genannten Art gelöst, bei der erfindungsgemäß auf der der Anode der Elektrolyt-Elektroden-Einheit zugewandten Seite der Verbundleiterplatte eine ChromCarbid CrₓC_{y} enthaltende Schicht zum Erniedrigen des elektrischen Serienwiderstands der Hochtemperatur-Brennstoffzelle angeordnet ist.

Versuche mit einem Hochtemperatur-Brennstoffzellenstapel und entsprechende Modellversuche haben ergeben, daß sich zwischen einem Nickelnetz und einer aus CrFeSY₂O₃l bestehenden Verbundleiterplatte, die auch als Interconnectorplatte bezeichnet wird, schon nach kurzer Betriebsdauer eine Oxidschicht bildet. Dabei wächst auf der Oberfläche derjenigen Seite der Verbundleiterplatter, die dem Brenngas führenden Raum der Hochtemperatur-Brennstoffzelle zugewandt ist, eine Oxidschicht auf, die im stoffschlüssigen Kontakt von Nickelnetz und Verbundleiterplatte wahrscheinlich aus einem CrNi-Spinell besteht und im nicht stoffschlüssigen Kontakt aus Cr₂O₃.

Ist das Nickelnetz beispielsweise an neun Stellen mittels Elektronenstrahlschweißverfahren an die Verbundleiterplatte angepunktet, so bilden diese Schweißkontaktstellen nur einen Bruchteil (<0,1%) der gesamten Kontaktstellen, die das Nikkelnetz mit der Verbundleiterplatte elektrisch verbinden. Der überwiegende Teil der Kontaktstellen ist als Druckkontakte ausgebildet, die durch das Anpressen des Nickelnetzes auf die Verbundleiterplatte entstehen. Diese Druckkontakte liegen auf der sich während des Betriebs der Hochtemperatur-Brennstoffzelle bildenden Oxidschicht, die sich mit fortlaufendem Betrieb nach einem parabolischen Gesetz in die Verbundleiterplatte einwächst.

Es liegt somit eine schlecht leitende Oxidschicht zwischen dem Nickelnetz und der Verbundleiterplatte vor, die den Serienwiderstand von in Reihe geschalteten Hochtemperatur-Brennstoffzellen ungünstig beeinflußt. Die Bildung des Chromoxids erfolgt bereits bei Sauerstoffpartialdrücken von etwa 10⁻¹⁸ bar. Diese Sauerstoffpartialdrücke sind im normalen Betrieb der Hochtemperatur-Brennstoffzelle immer gegeben.

Die Erfindung geht von der Überlegung aus, daß ein erhöhter elektrischer Serienwiderstand vermieden und eine hohe Leitfähigkeit auch über längere Zeit sichergestellt wird, wenn die Bildung der Oxidschicht auf der Verbundleiterplatte unterbunden wird. Dies wird während des Betriebs der Hochtemperatur-Brennstoffzelle dadurch zuverlässig erreicht, daß auf der Verbundleiterplatte ein Mittel angeordnet ist, das die Verbundleiterplatte vor einer Oxidation schützt. Ein solches Mittel, das die Verbundleiterplatte vor einer Oxidation schützt, ist damit ein Mittel, das den elektrischen Serienwiderstand während des Betriebs der Hochtemperatur-Brennstoffzelle gegenüber einer Zelle, die dieses Mittel nicht umfaßt, erniedrigt.

Eine Schutzschicht aus Chromcarbid CrₓC_{y} oxidiert unter Betriebsbedingungen nicht; sie ist also oxidationsgeschützt. Eine solche Schicht sollte gasdicht aufgetragen sein, damit sie für Sauerstoff nicht durchlässig ist. Umfangreiche Versuche haben gezeigt, daß eine Schicht aus Chromcarbid CrₓC_{y} die Verbundleiterplatte in sehr hohem Maße und zuverlässig vor Oxidation schützt. Ferner ist sie preiswert und leicht handhabbar.

Mit Vorteil wird als Chromcarbid Cr₃C₂, CrC, Cr₇C₃, oder Cr₂₃C₆ verwendet. Eine Schicht, die eine oder mehrere dieser Verbindungen umfaßt, ist in hohem Maße elektrisch leitend. Hierdurch beeinträchtigt die Schicht die elektrische Verbindung zwischen Anode und Verbundleiterplatte nicht oder nur unwesentlich. Eine solche Schicht ist bei üblicherweise während des Betriebs der Hochtemperatur-Brennstoffzelle auf der Brenngasseite der Verbundleiterplatte herrschenden Sauerstoff-Partialdrücken sehr korrosionsbeständig. Sie ist ferner gegenüber den Betriebsmitteln, die auf der Brenngasseite die Verbundleiterplatte während des Betriebs passieren - beispielsweise Methan oder kohlestämmige Gase - chemisch stabil.

Zweckmäßigerweise beträgt die Dicke der Schicht 5µm bis 10µm. Eine aus Chromcarbid bestehende Schicht dieser Dicke schützt die Brenngasseite der Verbundleiterplatte besonders effektiv vor Oxidation.

In weiterer vorteilhafter Ausgestaltung der Erfindung ist zwischen der Verbundleiterplatte und der Anode der Elektroly-Elektroden-Einheit ein Nickelnetz angeordnet, das mit der Verbundleiterplatte elektrisch verbunden ist. Das Nickelnetz kann auch als Nickelnetzpaket ausgeführt sein, das ein dünneres Kontaktnetz und ein dickeres Tragnetz umfaßt. Der Werkstoff Nickel ist besonders günstig, da er bei den üblicherweise während des Betriebs der Hochtemperatur-Brennstoffzelle auf der Brenngasseite herrschenden Sauerstoffpartialdrücken nicht oxidiert. Ferner ist Nickel preiswert und leicht handhabbar. Ein aus Nickel gefertigtes Netz ist elastisch und gewährleistet auch bei bloßem Aufliegen auf der Verbundleiterplatte eine ausreichende elektrische Kontaktierung zwischen Verbundleiterplatte und Nickelnetz. Diese Kontaktierung bleibt auch bei Temperaturschwankungen innerhalb der Hochtemperatur-Brennstoffzelle erhalten.

Eine dünne Chromcarbidschicht ist elektrisch leitfähig, so daß die anfängliche Leitfähigkeit des Verbunds Verbundleiterplatte-Chromcarbidschicht-Nickelnetz praktisch innerhalb der gesamten Betriebsdauer erhalten bleibt. Durch diese elektrische Leitfähigkeit der Chromcarbidschicht ist das Nikkelnetz schon durch den mechanischen Kontakt des Aufliegens auf der Chromcarbidschicht mit der Verbundleiterplatteplatte elektrisch leitend verbunden. Eine verbesserte elektrische und mechanische Verbindung zwischen Nickelnetz und Verbundleiterplatteplatte wird durch das Anschweißen des Nickelnetzes an die Verbundleiterplatteplatte erreicht. Dies geschieht zweckmäßigerweise durch ein Punktschweißverfahren. Bei einem an die Verbundleiterplatteplatte angepunkteten Nickelnetz reichen die Schweißpunkte durch die Chromcarbidschicht hindurch und verbinden das Nickelnetz mit der Verbundleiterplatteplatte.

Die Beschichtung der Verbundleiterplatteplatte mit einer dünnen Chromcarbidschicht kann mit kostengünstigen Verfahren durchgeführt werden. Die Beschichtung kann z.B. durch ein PVD-Verfahren (Physical Vapour Deposition) erfolgen. Ein solchen Verfahren ist das Sputtern - beispielsweise in reinem Argon, Elektronenstrahlverdampfung oder Laserstrahlverdampfung. Durch diese Verfahren kann die Verbundleiterplatte einseitig beschichtet werden. Die Beschichtungstemperatur liegt unter 500°C.

Eine Alternative zum PVD-Verfahren besteht in einem CVD-Verfahren (Chemical Vapour Deposition). Bei diesem thermischen Beschichtungsverfahren wird die zu beschichtende Substanz in der Gasphase durch Zersetzung von Ausgangsmaterialien chemisch erzeugt und auf das zu beschichtende Bauteil aufgebracht.

In einer weiteren vorteilhaften Ausgestaltung der Erfindung besteht die Verbundleiterplatte aus CrFe5Y₂O₃l, d.h aus 94 Gewichts-% Chrom, 5 Gewichts-% Fe und 1 Gewichts-% Y₂O₃. Eine solche Verbundleiterplatte hat sich in zahlreichen Versuchen als geeignet für den Betrieb in einer Hochtemperatur-Brennstoffzelle erwiesen. Sie ist ferner problemlos mit einer Chromcarbidschicht zu beschichten.

Die zweitgenannte Aufgabe wird durch einen Hochtemperatur-Brennstoffzellenstapel der eingangs genannten Art gelöst, der Hochtemperatur-Brennstoffzellen umfaßt, bei denen erfindungsgemäß auf der der Anode der Elektrolyt-Elektroden-Einheit zugewandten Seite der Verbundleiterplatte ein Mittel zum Erniedrigen des elektrischen Serienwiderstands der Hochtemperatur-Brennstoffzelle angeordnet ist.

Um Wiederhoungen zu vermeiden, wird zur Beschreibung weiterer Ausgestaltungen und Vorteile der Erfindung auf obige Ausführungen verwiesen.

Ausführungsbeispiele der Erfindung werden im folgenden anhand von zwei Figuren näher erläutert. Es zeigen:
FIG 1 eine schematische Darstellung eines Ausschnitts aus einer Hochtemperatur-Brennstoffzelle;
FIG 2 eine detaillierte Darstellung eines Ausschnitts aus einer Hochtemperatur-Brennstoffzelle;

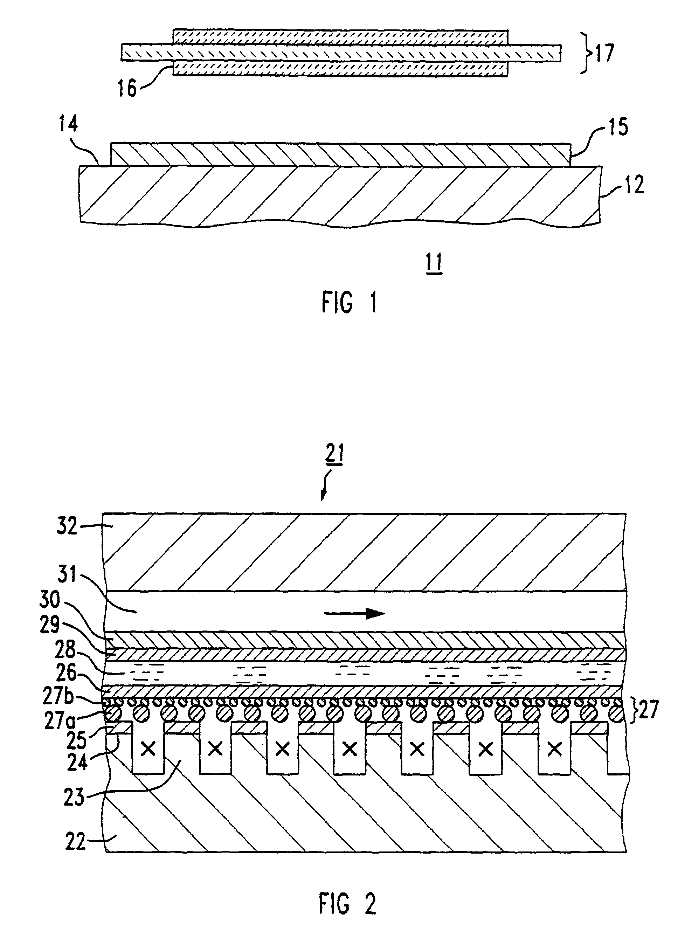

In Fig 1 ist eine schematische Darstellung eines Ausschnitts einer Verbundleiterplatte 12 einer Hochtemperatur-Brennstoffzelle 11 gezeigt. Die Oberfläche 14 der Brenngasseite der Verbundleiterplatte 12, - das ist die Oberfläche, die der Anode 16 der Elektrolyt-Elektroden-Einheit 17 der Hochtemperatur-Brennstoffzelle 11 zugewandt ist - ist mit einer Schicht 15 aus Chromcarbid Cr₂C₃ beschichtet. Die Verbundleiterplatte 12 ist durch einen nicht in der Figur dargestellen elektrischen Leiter mit der Anode 16 elektrisch verbunden. Der Zwischenraum zwischen der Anode 16 und der Schicht 15 ist ein Ausschnitt des Brenngasraumes der Hochtemperatur-Brennstoffzelle 11. Die Schicht 15 schützt die Brenngasseite der Verbundleiterplatte 12 effektiv und zuverlässig vor Oxidation während des Betriebs der Hochtemperatur-Brennstoffzelle 11.

Figur 2 zeigt eine detaillierte Darstellung eines Ausschnitts aus einer Hochtemperatur-Brennstoffzelle 21. Eine Verbundleiterplatte 22 aus CrFe5Y₂O₃1 ist mit einer Anzahl von Stegen 23 versehen, zwischen denen Betriebsmittel-Kanäle ausgebildet sind, die senkrecht zur Papierebene verlaufen. Diese Kanäle werden mit einem Brenngas, wie Wasserstoff, Erdgas oder Methan, beschickt. Die Oberfläche 24 der Verbundleiterplatte 22 ist mit einer dünnen Schicht 25 aus Chromcarbid CrC versehen, deren Dicke etwa 10 um beträgt. Die Schicht 25 ist mit einem PVD-Verfahren aufgebracht. Das Nickelnetz 27 ist durch Schweißpunkte, die durch die Schicht 25 aus Chromcarbid hindurchreichen, mit der Verbundleiterplatte 22 elektrisch und mechanisch verbunden. Der Übersichtlichkeit halber sind die Schweißpunkte in der Figur nicht dargestellt. Das Nickelnetz 27 ist hier ein Nickelnetzpaket, bestehend aus einem groben, dickeren Nickel-Tragnetz 27a und einem feinen, dünneren Nickel-Kontaktnetz 27b. An dieses Nickelnetz 27 grenzt über eine dünne Anode 26 ein Festkörperelektrolyt 28 an. Dieser Festkörperelektrolyt 28 wird nach oben von einer Kathode 29 begrenzt. An die Kathode 29 schließt sich über eine Kontaktschicht 30 eine weiterere Verbundleiterplatte 32 an, der nach oben hin nur zum Teil dargestellt ist. In die Verbundleiterplatte 32 sind eine Anzahl von Betriebsmittel-Kanälen 31 eingearbeitet, von denen nur einer gezeigt ist. Die Betriebsmittel-Kanäle 31 verlaufen parallel zur Papierebene und führen während des Betriebs der Hochtemperatur-Brennstoffzelle 21 Sauerstoff oder Luft.

Die Einheit bestehend aus Kathode 29, Festkörperelektrolyt 28 und Anode 26 wird als Elektrolyt-Elektroden-Einheit bezeichnet.

Die in Figur 2 gezeigte Schicht 25 aus Chromcarbid verhindert eine störende Oxidation der darunterliegenden Verbundleiterplatte 22 während des Betriebs der Hochtemperatur-Brennstoffzelle 21. Insbesondere wird auch die Unterkorrosion der Schweißpunkte unterbunden. Die Hochtemperatur-Brennstoffzelle 21 besitzt hierdurch einen geringen Serienwiderstand, der sich im Laufe der Betriebsdauer nicht oder nur unwesentlich erhöht.

Mehrere solcher Hochtemperatur Brennstoffzellen 21 können zu einem "Stack" oder Brennstoffzellen-Stapel zusammengefaßt werden.

## Patentansprüche

1. Hochtemperatur-Brennstoffzelle (11, 21) mit wenigstens einer Verbundleiterplatte (12, 22) und einer Elektrolyt-Elektroden-Einheit (17),
**dadurch gekennzeichnet, daß** auf der der Anode (16,26) der Elektrolyt-Elektroden-Einheit (17) zugewandten Seite der Verbundleiterplatte (12,22) eine Chromcarbid CrₓC_{y} enthaltende Schicht (15, 25) zum Erniedrigen des elektrischen Serienwiderstands der Hochtemperatur-Brennstoffzelle (11,21) angeordnet ist.

2. Hochtemperatur-Brennstoffzelle (11,21) nach Anspruch 1,
**dadurch gekennzeichnet, daß** als Chromcarbid Cr₃C₂, CrC, Cr₇C₃, oder Cr₂₃C₆ verwendet wird.

3. Hochtemperatur-Brennstoffzelle (11,21) nach Anspruch 1 oder 2, **dadurch gekennzeichnet, daß** die Schicht (15,25) eine Dicke zwischen 5µm und 10µm aufweist.

4. Hochtemperatur-Brennstoffzelle (11,21) nach einem der Ansprüche 1 bis 3, **dadurch gekennzeichnet, daß** zwischen der Verbundleiterplatte (12,22) und der Anode (16,26) der Elektrolyt-Elektroden-Einheit (17) ein Nickelnetz (27) angeordnet ist, das mit der Verbundleiterplatte (12,22) elektrisch leitend verbunden ist.

5. Hochtemperatur-Brennstoffzelle (11,21) nach einem der Ansprüche 1 bis 4, **dadurch gekennzeichnet, daß** das Nickelnetz (27) durch die Schicht (15,25) auf der Verbundleiterplatte (12,22) angeschweißt ist, bevorzugt mittels eines Punktschweißverfahrens.

6. Hochtemperatur-Brennstoffzelle (11,21) nach einem der Ansprüche 1 bis 5, **dadurch gekennzeichnet, daß** die Schicht mittels PVD-Verfahren oder CVD-Verfahren auf die Verbundleiterplatte (12,22) aufgebracht ist.

7. Hochtemperatur-Brennstoffzelle (11,21) nach einem der Ansprüche 1 bis 6, **dadurch gekennzeichnet, daß** die Verbundleiterplatte (12,22) aus CrFe5Y₂O₃l besteht.

8. Hochtemperatur-Brennstoffzellenstapel, der eine Vielzahl übereinander angeordneter Verbundleiterplatten (12,22,32) mit jeweils zwischen zwei Verbundleiterplatten (12,22,32) liegender Elektrolyt-Elektroden-Einheit (17) aufweist, wobei jeweils zwei benachbarte Verbundleiterplatten (12,22,32) mit der dazwischen liegenden Elektrolyt-Elektroden-Einheit (17) eine Hochtemperatur-Brennstoffzelle (11,21) nach einem der Ansprüche 1 bis 7 bilden.

## Claims

1. High-temperature fuel cell (11,21) with at least one interconnector plate (12,22) and with an electrolyte/electrode unit (17), **characterized in that** a layer comprising chromium carbide CrₓC_{y} for lowering the series electrical resistance of the high-temperature fuel cell (11,21) has been arranged on that side of the interconnector plate (12,22) which faces towards the anode (16,26) of the electrolyte/electrode unit (17).

2. High-temperature fuel cell (11,21) according to Claim 1, **characterized in that** the chromium carbide used comprises Cr₃C₂, CrC, Cr₇C₃, or Cr₂₃C₆.

3. High-temperature fuel cell (11,21) according to Claim 1 or 2, **characterized in that** the layer (15,25) has a thickness of from 5 µm to 10 µm.

4. High-temperature fuel cell (11,21) according to any of Claims 1 to 3, **characterized in that** a nickel grid (27) has been arranged between the interconnector plate (12,22) and the anode (16,26) of the electrolyte/electrode unit (17) and has been connected electrically to the interconnector plate (12,22).

5. High-temperature fuel cell (11,21) according to any of Claims 1 to 4, **characterized in that** the nickel grid (27) has been fused onto the interconnector plate (12,22) by the layer (15,25), preferably by means of a spot welding process.

6. High-temperature fuel cell (11,21) according to any of Claims 1 to 5, **characterized in that** the layer has been applied to the interconnector plate (12,22) by means of PVD processes or CVD processes.

7. High-temperature fuel cell (11,21) according to any of Claims 1 to 6, **characterized in that** the interconnector plate (12,22) is composed of CrFe5Y₂O₃l.

8. Stack of high-temperature fuel cells which has a large number of interconnector plates (12,22,32) arranged one on top of the other with an electrolyte/electrode unit (17) situated between each two interconnector plates (12,22,32), where each two adjacent interconnector plates (12,22,32) form, with the electrolyte/electrode unit (17) situated therebetween, a high-temperature fuel cell (11,21) according to any of Claims 1 to 7.

## Revendications

1. Pile (11, 21) à combustible à haute température, comprenant au moins une plaque (12, 22) conductrice d'interconnexion et une unité (17) électrolyte-électrodes,
**caractérisée en ce qu'**il est prévu sur la face de la plaque (12, 22) conductrice d'interconnexion tournée vers l'anode (16, 26) de l'unité (17) électrolyte-électrodes une couche (15, 25) qui contient du carbure de chrome CrₓC_{y} et qui est destinée à abaisser la résistance électrique série de la pile (11, 21) à combustible à haute température.

2. Pile (11, 21) à combustible à haute température suivant la revendication 1, **caractérisée en ce qu'**il est utilisé comme carbure de chrome Cr₃C₂, CrC, Cr₇C₃ ou Cr₂₃C₆.

3. Pile (11, 21) à combustible à haute température suivant la revendication 1 ou 2, **caractérisée en ce que** la couche (15, 25) a une épaisseur comprise entre 5 µm et 10 µm.

4. Pile (11, 21) à combustible à haute température suivant l'une des revendications 1 à 3, **caractérisée en ce qu'**il est prévu entre la plaque (12, 22) conductrice d'interconnexion et l'anode (16, 26) de l'unité (17) électrolyte-électrodes un réseau (27) de nickel qui est relié d'une manière conductrice de l'électricité à la plaque (12, 22) conductrice d'interconnexion.

5. Pile (11, 21) à combustible à haute température suivant l'une des revendications 1 à 4, **caractérisée en ce que** le réseau (27) de nickel est soudé par la couche (15, 25) à la plaque (12, 22) conductrice d'interconnexion de préférence au moyen d'un procédé de soudage par points.

6. Pile (11, 21) à combustible à haute température suivant l'une des revendications 1 à 5, **caractérisée en ce que** la couche est déposée au moyen d'un procédé PVD ou d'un procédé CVD sur la plaque (12, 22) conductrice d'interconnexion.

7. Pile (11, 21) à combustible à haute température suivant l'une des revendications 1 à 6, **caractérisée en ce que** la plaque (12, 22) conductrice d'interconnexion est en CrFe5Y₂O₃1.

8. Empilage de piles à combustible à haute température qui comporte une pluralité de plaques (12, 22, 32) conductrices d'interconnexion superposées avec une unité (17) électrolyte-électrodes interposée respectivement entre deux plaques (12, 22, 32) conductrices d'interconnexion, deux plaques (12, 22, 32) conductrices d'interconnexion voisines formant avec l'unité (17) électrolyte-électrodes entre elles une pile (11, 21) une pile (11, 21) à combustible à haute température suivant l'une des revendications 1 à 7.
